(19) Europäisches Patentamt / European Patent Office / Office européen des brevets

(11) EP 3 808 570 B1

(12) **EUROPEAN PATENT SPECIFICATION**

(45) Date of publication and mention of the grant of the patent:
**15.11.2023 Bulletin 2023/46**

(21) Application number: **20196120.8**

(22) Date of filing: **15.09.2020**

(51) International Patent Classification (IPC):
***B60C 1/00*** (2006.01) ***B60C 11/00*** (2006.01)
***C08L 7/00*** (2006.01)

(52) Cooperative Patent Classification (CPC):
(C-Sets available)
**B60C 1/0016; B60C 11/005; C08L 7/00;**
Y02T 10/86 (Cont.)

(54) **BASE TREAD COMPOSITION AND TIRE**

BASISLAUFFLÄCHENZUSAMMENSETZUNG UND REIFEN

COMPOSITION DE BANDE DE ROULEMENT DE BASE ET PNEU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.10.2019 JP 2019188537**

(43) Date of publication of application:
**21.04.2021 Bulletin 2021/16**

(73) Proprietor: **Sumitomo Rubber Industries, Ltd.**
**Kobe-shi, Hyogo 651-0072 (JP)**

(72) Inventors:
- **KITAMURA, Naoya**
  **Kobe-shi, Hyogo 651-0072 (JP)**
- **ISHINO, Soh**
  **Kobe-shi, Hyogo 651-0072 (JP)**

(74) Representative: **TBK**
**Bavariaring 4-6**
**80336 München (DE)**

(56) References cited:
**EP-A1- 3 323 633** **FR-A1- 3 071 842**
**JP-A- 2018 100 321**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets

**C08L 7/00, C08L 9/06, C08L 9/00, C08L 45/00, C08L 83/08, C08L 91/00, C08L 91/06, C08L 45/00, C08K 3/04, C08K 3/36, C08K 3/06, C08K 5/09, C08K 3/22, C08K 5/31, C08K 5/47, C08K 5/18, C08K 5/3415, C08K 5/098, C08K 5/098, C08K 5/20;**
**C08L 7/00, C08L 9/06, C08L 9/00, C08L 45/00, C08L 91/00, C08L 91/06, C08L 45/00, C08K 3/04, C08K 3/36, C08K 3/06, C08K 5/09, C08K 3/22, C08K 5/31, C08K 5/47, C08K 5/18, C08K 5/3415, C08K 5/098, C08K 5/098, C08K 5/20, C08K 5/548;**
**C08L 7/00, C08L 53/02, C08L 9/06, C08L 9/00, C08L 45/00, C08L 83/08, C08L 91/00, C08L 91/06, C08L 45/00, C08K 3/04, C08K 3/36, C08K 3/06, C08K 5/09, C08K 3/22, C08K 5/31, C08K 5/47, C08K 5/18, C08K 5/3415, C08K 5/098, C08K 5/098, C08K 5/20**

## Description

### TECHNICAL FIELD

The present invention relates to a base tread composition and a tire.

### BACKGROUND ART

Various techniques for improving the rolling resistance properties of tires have been used to save energy. These techniques include a tire having a two-layer tread (an inner surface layer and an outer surface layer) in which a base tread corresponding to the inner surface layer contains a composition with excellent fuel economy (see, for example, Patent Literature 1). However, the conventional techniques leave room for improvement in overall performance in terms of fuel economy, tensile strength at break, and elongation at break.

EP 3323633 A1 relates to a pneumatic tire comprising a carcass and a tread located radially outward of the carcass and extending between the tire sidewalls, the tread provides a radially outermost tread running surface and comprises a first tread layer comprising a first rubber compound and a second tread layer comprising a second rubber compound, wherein the second tread layer is located radially adjacent to the first tread layer. The first rubber compound is compositionally distinct from the second rubber compound, wherein the first rubber compound comprises 100 parts by weight of at least one diene based elastomer, and from 1 to 150 phr of silica and the second rubber compound comprises a diene base elastomer, from 50 to 120 phr of a filler, wherein at least 20 phr of the filler is a specific carbon black, 1 to 45 phr of a methylene acceptor, 1 to 25 phr of a methylene donor, and 1 to 30 phr of at least one additive selected from the group consisting of carbamic resins, liquid diene based polymers having a number average molecular weight in a range of from 1000 to 25000, and aromatic hydrocarbon resins.

JP 2018-100321 A relates to a rubber composition for a studless tire, which contains a rubber component containing an isoprene-based rubber and a resin satisfying a following expression (1): $y \leq 30x+320$, wherein x is a SP value of resin, and y is a cloud point of resin.

FR 3071842 A1 relates a rubber composition, which is based on at least: a diene elastomer; a reinforcing inorganic filler; an agent for coupling the reinforcing inorganic filler with the diene elastomer, said coupling agent being a specific organofunctional silane oligomer, bearing at least one blocked mercaptosilane unit and at least one mercaptosilane unit, a hydrocarbon-based resin predominantly composed of monomers chosen from the group consisting of cyclopentadiene, dicyclopentadiene, methylcyclopentadiene and mixtures thereof, and a crosslinking system.

### CITATION LIST

### PATENT LITERATURE

Patent Literature 1: JP 2014-189774 A

### SUMMARY OF INVENTION

### TECHNICAL PROBLEM

The present invention aims to solve the problem and provide a base tread composition that provides improved overall performance in terms of fuel economy, tensile strength at break, and elongation at break, and a tire including the composition.

### SOLUTION TO PROBLEM

The present invention relates to a tire, including a base tread containing a base tread composition and a cap tread containing a cap tread composition,

the base tread composition containing:

an elastomer component;
a silica; and
at least one of a dicyclopentadiene-aromatic compound copolymer resin or a hydrogenated dicyclopentadiene resin, and

the cap tread composition containing:

an elastomer component;
a silica; and
at least one of a dicyclopentadiene-aromatic compound copolymer resin or a hydrogenated dicyclopentadiene resin.

In the base tread composition, a combined amount of the dicyclopentadiene-aromatic compound copolymer resin and the hydrogenated dicyclopentadiene resin is preferably 80 parts by mass or less per 100 parts by mass of the total elastomer component.
The base tread composition preferably contains a mercapto silane coupling agent.
The tire is preferably for passenger vehicles.

ADVANTAGEOUS EFFECTS OF INVENTION

The present invention provides a tire containing a base tread composition and a cap tread composition each containing an elastomer component, a silica, and a dicyclopentadiene-aromatic compound copolymer resin and/or a hydrogenated dicyclopentadiene resin. Such a composition provides improved overall performance in terms of fuel economy, tensile strength at break, and elongation at break.

DESCRIPTION OF EMBODIMENTS

The base tread composition and the cap tread composition of the tire of the present invention each contain an elastomer component, a silica, and a dicyclopentadiene-aromatic compound copolymer resin and/or a hydrogenated dicyclopentadiene resin. The base tread composition thus provides improved overall performance in terms of fuel economy, tensile strength at break, and elongation at break.
The reason why the above effect is provided by the base tread composition is not exactly clear but is believed to be as follows.
The conventional techniques for improving tensile strength at break (TB) and elongation at break (EB) unfortunately deteriorate fuel economy. In contrast, the incorporation of a dicyclopentadiene-aromatic compound copolymer resin and/or a hydrogenated dicyclopentadiene resin tends to allow the composition to have an increased viscosity, which causes silica to undergo higher shear stress during kneading, resulting in improved silica dispersion. Therefore, the overall performance in terms of fuel economy, tensile strength at break, and elongation at break can be synergistically improved.
Such a composition with good tensile strength at break and elongation at break has good adhesion to an adjacent component (cap tread) and thus provides good resistance to tread block chipping.
Further, the presence of a dicyclopentadiene-aromatic compound copolymer resin and/or a hydrogenated dicyclopentadiene resin leads to better adhesion to the adjacent cap tread and thus better resistance to tread block chipping.
Moreover, in the tire of the present invention, which has a base tread including a base tread composition containing an elastomer component, a silica, and a dicyclopentadiene-aromatic compound copolymer resin and/or a hydrogenated dicyclopentadiene resin, and a cap tread including a cap tread composition containing an elastomer component, a silica, and a dicyclopentadiene-aromatic compound copolymer resin and/or a hydrogenated dicyclopentadiene resin, synergistically improved resistance to tread block chipping is provided.
The reason for this effect is not exactly clear but is believed to be as follows.
As described above for the base tread composition, the conventional techniques for improving tensile strength at break (TB) and elongation at break (EB) unfortunately deteriorate fuel economy; in contrast, the incorporation of a dicyclopentadiene-aromatic compound copolymer resin and/or a hydrogenated dicyclopentadiene resin also tends to allow the cap tread composition to have an increased viscosity, which causes silica to undergo higher shear stress during kneading, resulting in improved silica dispersion. Therefore, the overall performance in terms of fuel economy, tensile strength at break, and elongation at break can be synergistically improved.
The cap tread adheres well to the adjacent base tread with good tensile strength at break and elongation at break, and at the same time the cap tread itself has good tensile strength at break and elongation at break, thereby resulting in synergistically good resistance to tread block chipping.
Further, the presence of a dicyclopentadiene-aromatic compound copolymer resin and/or a hydrogenated dicyclopentadiene resin leads to better adhesion to the adjacent base tread and thus better resistance to tread block chipping.
The chemicals which may be used in the base tread composition are described below.

Non-limiting examples of the elastomer component include thermoplastic elastomers and rubber components. These may be used alone or in combinations of two or more. Rubber components are preferred among these.

Herein, the term "elastomer component" refers to an elastic polymer component that serves as a base material of the composition.

The elastomer component preferably has a weight average molecular weight (Mw) of 50,000 or more, more preferably 150,000 or more, still more preferably 350,000 or more. The upper limit of the Mw is not limited, but is preferably 4,000,000 or less, more preferably 3,000,000 or less.

Non-limiting examples of the thermoplastic elastomers include olefin thermoplastic elastomers, styrene thermoplastic elastomers, vinyl chloride thermoplastic elastomers, urethane thermoplastic elastomers, polyamide thermoplastic elastomers, polyester thermoplastic elastomers, and fluorine thermoplastic elastomers. These may be used alone or in combinations of two or more. Styrene thermoplastic elastomers are preferred among these.

The styrene thermoplastic elastomers may be any thermoplastic elastomer having a styrene unit, preferably a styrene block unit. Examples include styrene-isobutylene-styrene block copolymers (SIBS), styrene-isoprene-styrene block copolymers (SIS), styrene-isobutylene block copolymers (SIB), styrene-butadiene-styrene block copolymers (SBS), styrene-ethylene/butene-styrene block copolymers (SEBS), styrene-ethylene/propylene-styrene block copolymers (SEPS), styrene-ethylene/ethylene/propylene-styrene block copolymers (SEEPS), and styrene-butadiene/butylene-styrene block copolymers (SBBS). These may be used alone or in combinations of two or more. SIS, SBS, SEBS, and SBBS are preferred among these, with SIS or SEBS being more preferred.

Commercial thermoplastic elastomers manufactured or sold by Kaneka Corporation, Kraton Corporation, Asahi Kasei Corporation, etc. may be used.

Non-limiting examples of the rubber components include diene rubbers such as isoprene-based rubbers, polybutadiene rubber (BR), styrene-butadiene rubber (SBR), styrene-isoprene-butadiene rubber (SIBR), acrylonitrile-butadiene rubber (NBR), chloroprene rubber (CR), and butyl rubber (IIR); acrylic rubbers such as butyl acrylate rubber, ethyl acrylate rubber, and octyl acrylate rubber; nitrile rubbers; isobutylene rubbers; silicone rubbers (millable type, room temperature vulcanizable type); and fluororubbers. These rubber components may be used alone or in combinations of two or more. Among these, diene rubbers are preferred, with isoprene-based rubbers, BR, and SBR being more preferred.

The amount of the rubber components based on 100% by mass of the total elastomer component is preferably 20% by mass or more, more preferably 50% by mass or more, still more preferably 70% by mass or more, particularly preferably 80% by mass or more, most preferably 90% by mass or more, and may be 100% by mass. When the amount is within the range indicated above, the advantageous effect tends to be better achieved.

The amount of the diene rubbers based on 100% by mass of the total elastomer component is preferably 20% by mass or more, more preferably 50% by mass or more, still more preferably 70% by mass or more, particularly preferably 80% by mass or more, most preferably 90% by mass or more, and may be 100% by mass. When the amount is within the range indicated above, the advantageous effect tends to be better achieved.

Any SBR may be used. Examples include SBR generally used in the tire industry, such as emulsion-polymerized SBR (E-SBR) and solution-polymerized SBR (S-SBR). These may be used alone or in combinations of two or more.

The SBR preferably has a styrene content of 3% by mass or higher, more preferably 5% by mass or higher, still more preferably 10% by mass or higher, particularly preferably 15% by mass or higher, most preferably 20% by mass or higher, further most preferably 25% by mass or higher, but preferably 60% by mass or lower, more preferably 55% by mass or lower, still more preferably 50% by mass or lower, particularly preferably 45% by mass or lower, most preferably 40% by mass or lower, further most preferably 30% by mass or lower. When the styrene content is within the range indicated above, the advantageous effect tends to be more suitably achieved.

The SBR may be either an unmodified SBR or a modified SBR.

The modified SBR may be any SBR having a functional group interactive with a filler such as silica. For example, it may be a chain end-modified SBR obtained by modifying at least one chain end of a SBR with a compound (modifier) having the functional group (i.e., a chain end-modified SBR terminated with the functional group); a backbone-modified SBR having the functional group in the backbone; a backbone- and chain end-modified SBR having the functional group in both the backbone and chain end (e.g., a backbone- and chain end-modified SBR in which the backbone has the functional group and at least one chain end is modified with the modifier); or a chain end-modified SBR that has been modified (coupled) with a polyfunctional compound having two or more epoxy groups in the molecule so that a hydroxyl or epoxy group is introduced thereinto. These may be used alone or in combinations of two or more.

Examples of the functional group include amino, amide, silyl, alkoxysilyl, isocyanate, imino, imidazole, urea, ether, carbonyl, oxycarbonyl, mercapto, sulfide, disulfide, sulfonyl, sulfinyl, thiocarbonyl, ammonium, imide, hydrazo, azo, diazo, carboxyl, nitrile, pyridyl, alkoxy, hydroxyl, oxy, and epoxy groups. These functional groups may have a substituent group. Among these, amino (preferably amino whose hydrogen atom is replaced with a C1-C6 alkyl group), alkoxy (preferably C1-C6 alkoxy), alkoxysilyl (preferably C1-C6 alkoxysilyl), and amide groups are preferred.

The SBR may be a SBR product manufactured or sold by, for example, Sumitomo Chemical Co., Ltd., JSR Corporation, Asahi Kasei Corporation, Zeon Corporation, or Lanxess.

The amount of the SBR based on 100% by mass of the total elastomer component is preferably 5% by mass or more, more preferably 10% by mass or more, but is preferably 60% by mass or less, more preferably 30% by mass or less. When the amount is within the range indicated above, the advantageous effect tends to be better achieved.

Any BR may be used. Examples include those generally used in the tire industry, such as high cis content BR, 1,2-syndiotactic polybutadiene crystal (SPB)-containing BR, and BR synthesized using rare earth catalysts (rare earth-catalyzed BR) . These may be used alone or in combinations of two or more. Among these, rare earth-catalyzed BR is preferred in order to more suitably achieve the advantageous effect.

Conventional rare earth-catalyzed BR may be used. Examples include those synthesized using rare earth catalysts (catalysts containing lanthanide rare earth compounds, organic aluminum compounds, aluminoxanes, or halogen-containing compounds, optionally with Lewis bases). In particular, preferred is Nd-catalyzed BR which is synthesized using neodymium catalysts.

The BR preferably has a cis content of 90% by mass or higher, more preferably 95% by mass or higher. The upper limit of the cis content is not limited and may be 100% by mass. However, it is preferably 98% by mass or lower. When the cis content is within the range indicated above, the advantageous effect tends to be more suitably achieved.

The BR preferably has a vinyl content of 1.8% by mass or lower, more preferably 1.0% by mass or lower, still more preferably 0.5% by mass or lower, particularly preferably 0.3% by mass or lower. The lower limit of the vinyl content is not limited. When the vinyl content is within the range indicated above, the advantageous effect tends to be more suitably achieved.

The BR may be either an unmodified BR or a modified BR. Examples of the modified BR include those into which the above-mentioned functional groups are introduced. Preferred embodiments of the modified BR are as described for the modified SBR.

The BR may be, for example, a commercial product of Ube Industries, Ltd., JSR Corporation, Asahi Kasei Corporation, Zeon Corporation, or Lanxess.

The amount of the BR based on 100% by mass of the total elastomer component is preferably 5% by mass or more, more preferably 10% by mass or more, but is preferably 60% by mass or less, more preferably 30% by mass or less. When the amount is within the range indicated above, the advantageous effect tends to be better achieved.

Examples of the isoprene-based rubbers include natural rubber (NR), polyisoprene rubber (IR), refined NR, modified NR, and modified IR. The NR may be one commonly used in the tire industry, such as SIR20, RSS#3, or TSR20. Non-limiting examples of the IR include those commonly used in the tire industry, such as IR2200. Examples of the refined NR include deproteinized natural rubber (DPNR) and highly purified natural rubber (UPNR). Examples of the modified NR include epoxidized natural rubber (ENR), hydrogenated natural rubber (HNR), and grafted natural rubber. Examples of the modified IR include epoxidized polyisoprene rubber, hydrogenated polyisoprene rubber, and grafted polyisoprene rubber. These may be used alone or in combinations of two or more. Among these, NR is preferred.

The amount of the isoprene-based rubbers based on 100% by mass of the total elastomer component is preferably 30% by mass or more, more preferably 50% by mass or more, but is preferably 90% by mass or less, more preferably 80% by mass or less. When the amount is within the range indicated above, the advantageous effect tends to be better achieved.

Herein, the weight average molecular weight (Mw) and the number average molecular weight (Mn) can be determined by gel permeation chromatography (GPC) (GPC-8000 series available from Tosoh Corporation, detector: differential refractometer, column: TSKGEL SUPERMULTIPORE HZ-M available from Tosoh Corporation) calibrated with polystyrene standards.

The cis content (cis-1,4-butadiene unit content) and the vinyl content (1,2-butadiene unit content) can be determined by infrared absorption spectrometry. The styrene content can be determined by $^1$H-NMR analysis.

The composition (preferably elastomer composition, more preferably rubber composition) contains a silica. The silica may be a single type or a combination of two or more types.

Examples of the silica include dry silica (anhydrous silicic acid) and wet silica (hydrous silicic acid). Wet silica is preferred because it has a large number of silanol groups.

The silica preferably has a nitrogen adsorption specific surface area ($N_2SA$) of 50 $m^2/g$ or more, more preferably 80 $m^2/g$ or more, still more preferably 120 $m^2/g$ or more, particularly preferably 150 $m^2/g$ or more, but preferably 600 $m^2/g$ or less, more preferably 300 $m^2/g$ or less, still more preferably 250 $m^2/g$ or less, particularly preferably 200 $m^2/g$ or less. When the $N_2SA$ is within the range indicated above, the advantageous effect tends to be more suitably achieved.

Herein, the $N_2SA$ of the silica is measured by the BET method in accordance with ASTM D3037-81.

The silica may be, for example, a commercial product of Degussa, Rhodia, Tosoh Silica Corporation, Solvay Japan, or Tokuyama Corporation.

The amount of the silica per 100 parts by mass of the total elastomer component (preferably the total rubber component) is preferably 10 parts by mass or more, more preferably 20 parts by mass or more, but is preferably 100 parts by mass or less, more preferably 80 parts by mass or less, still more preferably 50 parts by mass or less. When the amount is within the range indicated above, the advantageous effect (in particular, improving fuel economy and

elongation at break) tends to be more suitably achieved.

In the composition, the amount of the silica based on 100% by mass of the total filler (reinforcing filler) is preferably 20% by mass or more, more preferably 30% by mass or more, still more preferably 40% by mass or more, particularly preferably 50% by mass or more, but is preferably 90% by mass or less, more preferably 80% by mass or less, still more preferably 70% by mass or less. When the amount is within the range indicated above, the advantageous effect tends to be more suitably achieved.

The rubber composition containing a silica preferably further contains a silane coupling agent.

Non-limiting examples of the silane coupling agent include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyl tetrasulfide, 2-triethoxysilylethyl-N,N-dimethylthiocarbamoyl tetrasulfide, and 3-triethoxysilylpropyl methacrylate monosulfide; mercapto silane coupling agents such as 3-mercaptopropyltrimethoxysilane and 2-mercaptoethyltriethoxysilane; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. Examples of commercially available silane coupling agents include products of Degussa, Momentive, Shin-Etsu Silicone, Tokyo Chemical Industry Co., Ltd., AZmax. Co., and Dow Corning Toray Co., Ltd. These may be used alone or in combinations of two or more. Among these, sulfide silane coupling agents and mercapto silane coupling agents are preferred, with mercapto silane coupling agents being more preferred, because then the advantageous effect tends to be better achieved.

Other examples of the mercapto silane coupling agents include compounds having mercapto groups and compounds having mercapto groups protected by protecting groups (e.g., compounds represented by the formula (III) below).

Particularly suitable mercapto silane coupling agents include silane coupling agents containing linking units A and B represented by the formulas (I) and (II), respectively, and silane coupling agents represented by the formula (III) below. Among these, silane coupling agents containing linking units A and B of formulas (I) and (II) are preferred.

The silane coupling agents containing linking units A and B of formulas (I) and (II) are described below.

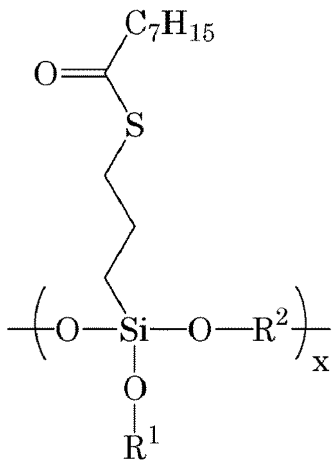 (I)

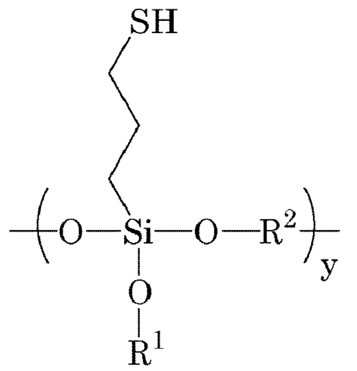

In the formulas, x represents an integer of 0 or more; y represents an integer of 1 or more; $R^1$ represents a hydrogen atom, a halogen atom, a branched or unbranched C1-C30 alkyl group, a branched or unbranched C2-C30 alkenyl group, a branched or unbranched C2-C30 alkynyl group, or the alkyl group in which a terminal hydrogen atom is replaced with a hydroxyl group or a carboxyl group; $R^2$ represents a branched or unbranched C1-C30 alkylene group, a branched or unbranched C2-C30 alkenylene group, or a branched or unbranched C2-C30 alkynylene group, provided that $R^1$ and $R^2$ may together form a cyclic structure.

The linking unit A content of the silane coupling agents containing linking units A and B of formulas (I) and (II) is preferably 30 mol% or higher, more preferably 50 mol% or higher, but is preferably 99 mol% or lower, more preferably 90 mol% or lower. Moreover, the linking unit B content is preferably 1 mol% or higher, more preferably 5 mol% or higher, still more preferably 10 mol% or higher, but is preferably 70 mol% or lower, more preferably 65 mol% or lower, still more preferably 55 mol% or lower. Moreover, the combined content of the linking units A and B is preferably 95 mol% or higher, more preferably 98 mol% or higher, particularly preferably 100 mol%.

The linking unit A or B content refers to the amount including the linking unit A or B present at the end of the silane coupling agent, if any. When the linking unit A or B is present at the end of the silane coupling agent, its form is not limited as long as it forms a unit corresponding to formula (I) representing the linking unit A or formula (II) representing the linking unit B.

Examples of the halogen atom for $R^1$ in formulas (I) and (II) include chlorine, bromine, and fluorine. Examples of the branched or unbranched C1-C30 alkyl group for $R^1$ include methyl and ethyl groups. Examples of the branched or unbranched C2-C30 alkenyl group for $R^1$ include vinyl and 1-propenyl groups. Examples of the branched or unbranched C2-C30 alkynyl group for $R^1$ include ethynyl and propynyl groups.

Examples of the branched or unbranched C1-C30 alkylene group for $R^2$ in formulas (I) and (II) include ethylene and propylene groups. Examples of the branched or unbranched C2-C30 alkenylene group for $R^2$ include vinylene and 1-propenylene groups. Examples of the branched or unbranched C2-C30 alkynylene group for $R^2$ include ethynylene and propynylene groups.

In the silane coupling agents containing linking units A and B of formulas (I) and (II), the total number of repetitions (x + y) consisting of the sum of the number of repetitions (x) of the linking unit A and the number of repetitions (y) of the linking unit B is preferably in the range of 3 to 300.

Examples of the silane coupling agents containing linking units A and B of formulas (I) and (II) include NXT-Z15, NXT-Z30, NXT-Z45, and NXT-Z80 all available from Momentive. These may be used alone or in combinations of two or more.

The silane coupling agents represented by the following formula (III) are described below.

$$(C_pH_{2p+1}O)_3Si\text{-}C_qH_{2q}\text{-}S\text{-}CO\text{-}C_kH_{2k+1} \qquad \text{(III)}$$

In the formula, p represents an integer of 1 to 3, q represents an integer of 1 to 5, and k represents an integer of 5 to 12.

The symbol p represents an integer of 1 to 3, preferably of 2. When p is within the range, the advantageous effect tends to be more suitably achieved.

The symbol q represents an integer of 1 to 5, preferably of 2 to 4, still more preferably of 3. When q is within the range, the advantageous effect tends to be more suitably achieved.

The symbol k represents an integer of 5 to 12, preferably of 5 to 10, more preferably of 6 to 8, still more preferably of 7. When k is within the range, the advantageous effect tends to be more suitably achieved.

Examples of the silane coupling agents of formula (III) include NXT available from Momentive. The silane coupling agents of formula (III) may be used alone or in combinations of two or more.

The amount of the silane coupling agent per 100 parts by mass of the silica is preferably 0.5 parts by mass or

more, more preferably 3 parts by mass or more, still more preferably 5 parts by mass or more, but is preferably 20 parts by mass or less, more preferably 15 parts by mass or less, still more preferably 10 parts by mass or less. When the amount is within the range indicated above, the advantageous effect tends to be better achieved.

The composition contains a dicyclopentadiene-aromatic compound copolymer resin (DCPD-aromatic compound copolymer resin) and/or a hydrogenated dicyclopentadiene resin (hydrogenated DCPD resin). These may be used alone or in combinations of two or more. Among these, the composition preferably contains a dicyclopentadiene-aromatic compound copolymer resin.

Herein, the term "dicyclopentadiene-aromatic compound copolymer resin" refers to a resin produced by copolymerization of dicyclopentadiene and an aromatic compound. It may be a hydrogenated dicyclopentadiene-aromatic compound copolymer resin.

The proportions of the aromatic compound and dicyclopentadiene may be appropriately selected. The aromatic content is preferably 2% by mass or higher, more preferably 5% by mass or higher, still more preferably 8% by mass or higher, but is preferably 30% by mass or lower, more preferably 20% by mass or lower, still more preferably 12% by mass or lower. When it is within the range indicated above, the advantageous effect tends to be better achieved.

Herein, the aromatic content refers to the amount of the unit derived from the aromatic compound based on 100% by mass of the dicyclopentadiene-aromatic compound copolymer resin.

The dicyclopentadiene-aromatic compound copolymer resin preferably has a weight average molecular weight (Mw) of 400 or more, more preferably 500 or more, still more preferably 700 or more, but preferably 1500 or less, more preferably 1200 or less, still more preferably 1000 or less. When the Mw is within the range indicated above, the advantageous effect tends to be better achieved.

The aromatic compound may be any compound having an aromatic ring. Examples include phenol compounds such as phenol, alkylphenols, alkoxyphenols, and unsaturated hydrocarbon group-containing phenols; naphthol compounds such as naphthol, alkylnaphthols, alkoxynaphthols, and unsaturated hydrocarbon group-containing naphthols; styrene and styrene derivatives such as alkylstyrenes, alkoxystyrenes, and unsaturated hydrocarbon group-containing styrenes; coumarone, and indene. These may be used alone or in combinations of two or more. Among these, phenol and styrene derivatives are preferred, with styrene derivatives being more preferred, with alkylstyrenes being still more preferred, with $\alpha$-methylstyrene being particularly preferred.

The number of carbon atoms of the alkyl or alkoxy groups in the compounds is preferably 1 to 20, more preferably 1 to 12, still more preferably 1 to 8, particularly preferably 1 to 5, most preferably 1 to 3. The number of carbon atoms of the unsaturated hydrocarbon groups in the compounds is preferably 2 to 20, more preferably 2 to 12, still more preferably 2 to 5.

The aromatic compound may have one substituent or two or more substituents on the aromatic ring. In the case of the aromatic compound having two or more substituents on the aromatic ring, the substituents may be located at any of the ortho, meta, or para positions. Moreover, in the case of a styrene derivative having a substituent on the aromatic ring, the substituent may be at the ortho, meta, or para position with respect to the vinyl group of styrene.

These aromatic compounds may be used alone or in combinations of two or more.

Specific examples of the alkylphenols include methylphenol, ethylphenol, butylphenol, t-butylphenol, octylphenol, nonylphenol, decylphenol, and dinonylphenol. They may be those substituted at any of the ortho, meta, or para positions. Among these, t-butylphenol is preferred, with p-t-butylphenol being more preferred.

Specific examples of the alkylnaphthols include compounds obtained by replacing the phenol moiety of the above-mentioned alkylphenols with naphthol.

Specific examples of the alkylstyrenes include compounds obtained by replacing the phenol moiety of the above-mentioned alkylphenols with styrene.

Specific examples of the alkoxyphenols include compounds obtained by replacing the alkyl groups of the above-mentioned alkylphenols with the corresponding alkoxy groups. Also, specific examples of the alkoxynaphthols include compounds obtained by replacing the alkyl groups of the alkylnaphthols with the corresponding alkoxy groups. Also, specific examples of the alkoxystyrenes include compounds obtained by replacing the alkyl groups of the alkylstyrenes with the corresponding alkoxy groups.

Examples of the unsaturated hydrocarbon group-containing phenols include compounds which contain at least one hydroxyphenyl group per molecule and in which at least one hydrogen atom of the phenyl group is substituted with an unsaturated hydrocarbon group. The unsaturated bond in the unsaturated hydrocarbon group may be a double bond or a triple bond.

Examples of the unsaturated hydrocarbon group include C2-C10 alkenyl groups.

Specific examples of the unsaturated hydrocarbon group-containing phenols include isopropenylphenol and butenylphenol. The unsaturated hydrocarbon group-containing naphthols and the unsaturated hydrocarbon group-containing styrenes are similarly described.

Herein, the term "hydrogenated dicyclopentadiene resin" refers to a dicyclopentadiene resin which has been hydrogenated.

Herein, the term "dicyclopentadiene resin" refers to a resin containing dicyclopentadiene as a main monomer component of the backbone (main chain) of the resin, but excludes dicyclopentadiene-aromatic compound copolymer resins. The amount of the unit derived from dicyclopentadiene based on 100% by mass of the resin is 50% by mass or more, preferably 80% by mass or more, more preferably 90% by mass or more, still more preferably 95% by mass or more, particularly preferably 98% by mass or more, most preferably 100% by mass. When the amount is within the range indicated above, the advantageous effect tends to be more suitably achieved.

Examples of the dicyclopentadiene resin include petroleum resins made mainly from dicyclopentadiene produced by dimerization of cyclopentadiene extracted from the C5 fraction of petroleum.

The hydrogenation may be carried out by known methods. Exemplary suitable methods include metal-catalyzed catalytic hydrogenation, and hydrazine-based hydrogenation (e.g., JP S59-161415 A). For example, the metal-catalyzed catalytic hydrogenation may be carried out by adding hydrogen under pressure in an organic solvent in the presence of a metal catalyst. Suitable examples of the organic solvent include tetrahydrofuran, methanol, and ethanol. These organic solvents may be used alone, or two or more of these may be used in admixture. Suitable examples of the metal catalyst include palladium, platinum, rhodium, ruthenium, and nickel. These metal catalysts may be used alone, or two or more of these may be used in admixture. The pressure to be applied is preferably, for example, 1 to 300 $kgf/cm^2$.

The hydrogenated dicyclopentadiene resin preferably has a degree of hydrogenation of double bonds (hydrogenation degree) of 20 mol% or higher, more preferably 35 mol% or higher, still more preferably 50 mol% or higher, particularly preferably 65 mol% or higher, most preferably 80 mol% or higher, further most preferably 90 mol% or higher, even most preferably 100 mol%. When the hydrogenation degree is within the range indicated above, the advantageous effect tends to be more suitably achieved.

Herein, the degree of hydrogenation (hydrogenation degree) can be calculated from the rate of decrease in the double bond signals in the $^1$H-NMR spectrum. Herein, the degree of hydrogenation (hydrogenation degree) means the degree of hydrogenation of double bonds.

The dicyclopentadiene-aromatic compound copolymer resin and the hydrogenated dicyclopentadiene resin each preferably have a softening point of 60 to 200°C. The upper limit of the softening point is more preferably 160°C or lower, still more preferably 150°C or lower, while the lower limit is more preferably 80°C or higher, still more preferably 90°C or higher. When the softening point is within the range indicated above, the advantageous effect tends to be more suitably achieved.

Herein, the softening point of the resins is determined as set forth in JIS K 6220-1:2001 using a ring and ball softening point measuring apparatus and defined as the temperature at which the ball drops down.

Exemplary commercial products of the dicyclopentadiene-aromatic compound copolymer resin and the hydrogenated dicyclopentadiene resin include products of JXTG Nippon Oil & Energy Corporation, Maruzen Petrochemical Co., Ltd., and Exxon Mobil.

Herein, the amount of the structural units of the resins is determined by $^1$H-NMR analysis.

The amount of the dicyclopentadiene-aromatic compound copolymer resin and the hydrogenated dicyclopentadiene resin (the combined amount of the dicyclopentadiene-aromatic compound copolymer resin and the hydrogenated dicyclopentadiene resin) per 100 parts by mass of the total elastomer component (preferably the total rubber component) is preferably 5 parts by mass or more, more preferably 8 parts by mass or more, but is preferably 80 parts by mass or less, more preferably 60 parts by mass or less, still more preferably 40 parts by mass or less, particularly preferably 30 parts by mass or less, most preferably 20 parts by mass or less. When the combined amount is within the range indicated above, the advantageous effect tends to be better achieved.

The composition may contain a resin other than the dicyclopentadiene-aromatic compound copolymer resin and the hydrogenated dicyclopentadiene resin.

The resin other than the dicyclopentadiene-aromatic compound copolymer resin and the hydrogenated dicyclopentadiene resin is not limited. Examples include solid styrene resins, alkylphenol resins, coumarone-indene resins, terpene resins, rosin resins, acrylic resins, and unhydrogenated dicyclopentadiene resins. These may be used alone or in combinations of two or more.

Exemplary commercial products of the resin other than the dicyclopentadiene-aromatic compound copolymer resin and the hydrogenated dicyclopentadiene resin include products of Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, Nitto Chemical Co., Ltd., Nippon Shokubai Co., Ltd., JXTG Nippon Oil & Energy Corporation, Arakawa Chemical Industries, Ltd., and Taoka Chemical Co., Ltd.

In addition to the resin(s), the composition may contain a softener. In this case, the advantageous effect tends to be better achieved. Any softener may be used. Examples include oils, liquid diene polymers, and ester plasticizers. These may be used alone or in combinations of two or more. Oils are preferred among these.

Examples of the oils include process oils, vegetable fats and oils, and mixtures thereof. Examples of the process oils include paraffinic process oils, aromatic process oils, and naphthenic process oils. Examples of the vegetable fats and oils include castor oil, cotton seed oil, linseed oil, rapeseed oil, soybean oil, palm oil, coconut oil, peanut oil, rosin,

pine oil, pine tar, tall oil, corn oil, rice oil, safflower oil, sesame oil, olive oil, sunflower oil, palm kernel oil, camellia oil, jojoba oil, macadamia nut oil, and tung oil. These may be used alone or in combinations of two or more. Among these, process oils are preferred, with aromatic process oils being more preferred, because then the advantageous effect can be well achieved.

Exemplary commercial products of the oils include products of Idemitsu Kosan Co., Ltd., Sankyo Yuka Kogyo K.K., JXTG Nippon Oil & Energy Corporation, Olisoy, H&R, Hokoku Corporation, Showa Shell Sekiyu K.K., and Fuji Kosan Co., Ltd.

Liquid diene polymers refer to diene polymers that are liquid at room temperature (25°C).

The liquid diene polymers preferably have a weight average molecular weight (Mw) of $3.0\times10^3$ or more, more preferably $4.0\times10^3$ or more, but preferably $1.0\times10^5$ or less, more preferably $1.5\times10^4$ or less. When the Mw is within the range indicated above, the advantageous effect can be more suitably achieved.

Examples of the liquid diene polymers include liquid styrene-butadiene copolymers (liquid SBR), liquid polybutadiene polymers (liquid BR), liquid polyisoprene polymers (liquid IR), and liquid styrene-isoprene copolymers (liquid SIR). These may be used alone or in combinations of two or more. Among these, liquid SBR is preferred in order to more suitably achieve the advantageous effect.

The liquid SBR preferably has a styrene content of 10% by mass or higher, more preferably 20% by mass or higher, still more preferably 30% by mass or higher, but preferably 55% by mass or lower, more preferably 50% by mass or lower. When the styrene content is within the range indicated above, the advantageous effect can be more suitably achieved.

Exemplary commercial products of the liquid diene polymers include products of Sartomer and Kuraray Co., Ltd.

Examples of the ester plasticizers include the above-mentioned vegetable oils; synthetic plasticizers and processed vegetable oils, such as glycerol fatty acid monoesters, glycerol fatty acid diesters, and glycerol fatty acid triesters; and phosphoric acid esters (e.g., phosphate plasticizers and mixtures thereof). These may be used alone or in combinations of two or more.

The amount of the softener (preferably oil) per 100 parts by mass of the total elastomer component (preferably the total rubber component) is preferably 1 part by mass or more, more preferably 2 parts by mass or more, but is preferably 50 parts by mass or less, more preferably 30 parts by mass or less, still more preferably 10 parts by mass or less. When the amount is within the range indicated above, the advantageous effect tends to be better achieved.

The term "softener" does not include the resins described above.

The composition may contain a carbon black. In this case, the advantageous effect tends to be better achieved. The incorporation of a carbon black together with the silica can further improve, in particular, fuel economy and elongation at break.

Non-limiting examples of the carbon black include N134, N110, N220, N234, N219, N339, N330, N326, N351, N550, and N762. These may be used alone or in combinations of two or more.

The carbon black preferably has a nitrogen adsorption specific surface area ($N_2SA$) of 30 $m^2/g$ or more, more preferably 50 $m^2/g$ or more, but preferably 200 $m^2/g$ or less, more preferably 150 $m^2/g$ or less, still more preferably 100 $m^2/g$ or less, particularly preferably 90 $m^2/g$ or less. When the $N_2SA$ is within the range indicated above, the advantageous effect tends to be better achieved.

Herein, the $N_2SA$ of the carbon black is measured in accordance with JIS K6217-2:2001.

The carbon black may be a commercial product of, for example, Asahi Carbon Co., Ltd., Cabot Japan K.K., Tokai Carbon Co., Ltd., Mitsubishi Chemical Corporation, Lion Corporation, NSCC Carbon Co., Ltd, or Columbia Carbon.

The amount of the carbon black per 100 parts by mass of the total elastomer component (preferably the total rubber component) is preferably 5 parts by mass or more, more preferably 10 parts by mass or more, but is preferably 70 parts by mass or less, more preferably 50 parts by mass or less, still more preferably 30 parts by mass or less. When the amount is within the range indicated above, the advantageous effect tends to be better achieved.

The composition preferably contains sulfur as a crosslinking agent (vulcanizing agent).

Examples of the sulfur include those generally used in the rubber industry, such as powdered sulfur, precipitated sulfur, colloidal sulfur, insoluble sulfur, highly dispersible sulfur, and soluble sulfur. These may be used alone or in combinations of two or more.

The sulfur may be a commercial product of, for example, Tsurumi Chemical Industry Co., Ltd., Karuizawa Sulfur Co., Ltd., Shikoku Chemicals Corporation, Flexsys, Nippon Kanryu Industry Co., Ltd., or Hosoi Chemical Industry Co., Ltd.

The amount of the sulfur per 100 parts by mass of the total elastomer component (preferably the total rubber component) is preferably 0.1 parts by mass or more, more preferably 0.5 parts by mass or more, but is preferably 5 parts by mass or less, more preferably 3 parts by mass or less. When the amount is within the range indicated above, the advantageous effect tends to be better achieved.

The composition preferably contains a vulcanization accelerator.

Examples of the vulcanization accelerator include thiazole vulcanization accelerators such as 2-mercaptobenzothiazole and di-2-benzothiazolyl disulfide; thiuram vulcanization accelerators such as tetramethylthiuram disulfide

(TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazolyl sulfenamide, N-t-butyl-2-benzothiazolyl sulfenamide, N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. These may be used alone or in combinations of two or more. Among these, sulfenamide vulcanization accelerators and guanidine vulcanization accelerators are preferred, with combinations of sulfenamide and guanidine vulcanization accelerators being more preferred.

The vulcanization accelerator may be a commercial product of, for example, Kawaguchi Chemical Industry Co., Ltd., Ouchi Shinko Chemical Industrial Co., Ltd., or Rhein Chemie.

The amount of the vulcanization accelerator per 100 parts by mass of the total elastomer component (preferably the total rubber component) is preferably 0.5 parts by mass or more, more preferably 1 part by mass or more, but is preferably 10 parts by mass or less, more preferably 5 parts by mass or less. When the amount is within the range indicated above, the advantageous effect tends to be better achieved.

The composition may contain a wax.

Non-limiting examples of the wax include petroleum waxes such as paraffin waxes and microcrystalline waxes; naturally-occurring waxes such as plant waxes and animal waxes; and synthetic waxes such as polymers of ethylene, propylene, or other similar monomers. These may be used alone or in combinations of two or more. Among these, petroleum waxes are preferred, with paraffin waxes being more preferred.

The wax may be a commercial product of, for example, Ouchi Shinko Chemical Industrial Co., Ltd., Nippon Seiro Co., Ltd., or Seiko Chemical Co., Ltd.

The amount of the wax per 100 parts by mass of the total elastomer component (preferably the total rubber component) is preferably 0.3 parts by mass or more, more preferably 0.5 parts by mass or more, but is preferably 20 parts by mass or less, more preferably 10 parts by mass or less. When the amount is within the range indicated above, the advantageous effect tends to be better achieved.

The composition may contain an antioxidant.

Examples of the antioxidant include: naphthylamine antioxidants such as phenyl-α-naphthylamine; diphenylamine antioxidants such as octylated diphenylamine and 4,4'-bis(α,α'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline antioxidants such as 2,2,4-trimethyl-1,2-dihydroquinoline polymer; monophenolic antioxidants such as 2,6-di-t-butyl-4-methylphenol and styrenated phenol; and bis-, tris-, or polyphenolic antioxidants such as tetrakis-[methylene-3-(3',5'-di-t-butyl-4'-hydroxyphenyl)propionate]methane. These may be used alone or in combinations of two or more. Among these, p-phenylenediamine antioxidants or quinoline antioxidants are preferred.

The antioxidant may be a commercial product of, for example, Seiko Chemical Co., Ltd., Sumitomo Chemical Co., Ltd., Ouchi Shinko Chemical Industrial Co., Ltd., or Flexsys.

The amount of the antioxidant per 100 parts by mass of the total elastomer component (preferably the total rubber component) is preferably 0.5 parts by mass or more, more preferably 1 part by mass or more, but is preferably 10 parts by mass or less, more preferably 5 parts by mass or less. When the amount is within the range indicated above, the advantageous effect tends to be better achieved.

The composition may contain stearic acid.

The stearic acid may be a conventional one, and examples include commercial products of NOF Corporation, Kao Corporation, FUJIFILM Wako Pure Chemical Corporation, and Chiba Fatty Acid Co., Ltd.

The amount of the stearic acid per 100 parts by mass of the total elastomer component (preferably the total rubber component) is preferably 0.5 parts by mass or more, more preferably 1 part by mass or more, but is preferably 10 parts by mass or less, more preferably 5 parts by mass or less. When the amount is within the range indicated above, the advantageous effect tends to be better achieved.

The composition may contain zinc oxide.

The zinc oxide may be a conventional one, and examples include commercial products of Mitsui Mining & Smelting Co., Ltd., Toho Zinc Co., Ltd., HakusuiTech Co., Ltd., Seido Chemical Industry Co., Ltd., and Sakai Chemical Industry Co., Ltd.

The amount of the zinc oxide per 100 parts by mass of the total elastomer component (preferably the total rubber component) is preferably 0.5 parts by mass or more, more preferably 1 part by mass or more, but is preferably 10 parts by mass or less, more preferably 5 parts by mass or less. When the amount is within the range indicated above, the advantageous effect tends to be better achieved.

The composition preferably contains a processing aid.

Examples of the processing aid include fatty acid metal salts, fatty acid amides, amide esters, silica surface activators, fatty acid esters, mixtures of fatty acid metal salts with amide esters, and mixtures of fatty acid metal salts with fatty acid amides. These may be used alone or in combinations of two or more. Among these, the processing aid

is preferably at least one selected from the group consisting of fatty acid metal salts, amide esters, and mixtures of fatty acid metal salts with amide esters or fatty acid amides, more preferably from fatty acid metal salts or mixtures of fatty acid metal salts with fatty acid amides.

The fatty acids of the fatty acid metal salts are not limited, and examples include saturated or unsaturated fatty acids, preferably C6-C28, more preferably C10-C25, still more preferably C14-C20, saturated or unsaturated fatty acids, such as lauric acid, myristic acid, palmitic acid, stearic acid, oleic acid, linoleic acid, linolenic acid, arachidic acid, behenic acid, and nervonic acid. These may be used alone, or two or more of these may be used in admixture. Among these, saturated fatty acids are preferred, with C14-C20 saturated fatty acids being more preferred.

Examples of the metals of the fatty acid metal salts include alkali metals such as potassium and sodium, alkaline earth metals such as magnesium, calcium, and barium, zinc, nickel, and molybdenum. These may be used alone or in combinations of two or more. Among these, zinc or calcium is preferred, with zinc being more preferred.

Examples of the amide esters include fatty acid amide esters containing the above-mentioned saturated or unsaturated fatty acids as constituent components. These may be used alone or in combinations of two or more.

The fatty acid amides may include saturated or unsaturated fatty acid amides. These may be used alone or in combinations of two or more. Examples of the saturated fatty acid amides include N-(1-oxooctadecyl)sarcosinamide, stearamide, and behenamide. Examples of the unsaturated fatty acid amides include oleamide and erucamide.

Specific examples of the mixtures of fatty acid metal salts with amide esters include Aflux 16 available from Rhein Chemie, which is a mixture of a fatty acid calcium salt with an amide ester.

Specific examples of the mixtures of fatty acid metal salts with fatty acid amides include WB16 available from Struktol, which is a mixture of a fatty acid calcium salt with a fatty acid amide.

The processing aid may be a commercial product of, for example, Rhein Chemie or Struktol.

The amount of the processing aid per 100 parts by mass of the total elastomer component (preferably the total rubber component) is preferably 0.5 parts by mass or more, more preferably 2 parts by mass or more, but is preferably 10 parts by mass or less, more preferably 6 parts by mass or less. When the amount is within the range indicated above, the advantageous effect tends to be better achieved.

The composition may contain an anti-reversion agent.

Non-limiting examples of the anti-reversion agent include 1,3-bis(citraconimidomethyl)benzene and mixtures of aliphatic carboxylic acid zinc salts with aromatic carboxylic acid zinc salts (e.g., Activator 73 A available from Struktol). These may be used alone or in combinations of two or more. Preferred among these is 1,3-bis(citraconimidomethyl)benzene.

The anti-reversion agent may be a commercial product of, for example, Flexsys or Struktol.

The amount of the anti-reversion agent per 100 parts by mass of the total elastomer component (preferably the total rubber component) is preferably 0.5 parts by mass or more, more preferably 1 part by mass or more, but is preferably 10 parts by mass or less, more preferably 6 parts by mass or less, still more preferably 4 parts by mass or less. When the amount is within the range indicated above, the advantageous effect tends to be better achieved.

In addition to the above components, the composition may contain additives generally used in the tire industry, such as organic peroxides, and fillers such as aluminum hydroxide, calcium carbonate, talc, alumina, clay, and mica. The amount of the additives is preferably 0.1 to 200 parts by mass per 100 parts by mass of the total elastomer component (preferably the total rubber component).

The composition may be prepared, for example, by kneading the components using a rubber kneading machine such as an open roll mill or a Banbury mixer, and then vulcanizing the kneaded mixture.

The kneading conditions are as follows. In a base kneading step of kneading additives other than vulcanizing agents and vulcanization accelerators, the kneading temperature is usually 100 to 180°C, preferably 120 to 170°C. In a final kneading step of kneading vulcanizing agents and vulcanization accelerators, the kneading temperature is usually 120°C or lower, preferably from 80 to 110°C. The composition obtained after kneading vulcanizing agents and vulcanization accelerators is usually vulcanized by, for example, press vulcanization. The vulcanization temperature is usually 130 to 190°C, preferably 150 to 185°C. The vulcanization time is usually 5 to 30 minutes.

The composition is suitable for base treads.

Herein, the term "cap tread" refers to an outer surface layer of a multilayer tread. For example, it corresponds to the outer surface layer of a tread having a two-layer structure (outer surface layer (cap tread) and inner surface layer (base tread)). The term "base tread" refers to an inner layer of a multilayer tread, and corresponds to the inner surface layer of the tread having a two-layer structure. The base tread is preferably in contact with the cap tread.

The tire of the present invention can be produced from the composition by usual methods. Specifically, the composition mixed with additives as needed, before vulcanization, may be extruded into the shape of a tire base tread and then formed and assembled with other tire components in a usual manner in a tire building machine to build an unvulcanized tire, which may then be heated and pressurized in a vulcanizer to produce a tire.

The base tread of the tire is formed at least partially or fully of the composition.

Non-limiting examples of the tire include pneumatic tires, solid tires, and airless tires. Pneumatic tires are

preferred among these.

The tire can be suitably used as tires for passenger vehicles, large passenger vehicles, large SUVs, trucks and buses, or two-wheeled vehicles, racing tires, winter tires (studless cold weather tires, snow tires, studded cold weather tires), all-season tires, run-flat tires, aircraft tires, or mining tires, especially as tires for passenger vehicles. The term "passenger vehicles" refers to motor vehicles used chiefly for human movement, and is the most common type of motor vehicles.

As described earlier, in the tire of the present invention, which has a base tread including a base tread composition containing an elastomer component, a silica, and a dicyclopentadiene-aromatic compound copolymer resin and/or a hydrogenated dicyclopentadiene resin, and a cap tread including a cap tread composition containing an elastomer component, a silica, and a dicyclopentadiene-aromatic compound copolymer resin and/or a hydrogenated dicyclopentadiene resin, synergistically improved resistance to tread block chipping is provided.

The base tread in the tire preferably has a thickness in the tire radial direction of 0.2 mm or more, more preferably 0.3 mm or more, still more preferably 0.5 mm or more, but preferably 5.0 mm or less, more preferably 2.0 mm or less, still more preferably 1.5 mm or less. When the base tread has a thickness in the tire radial direction within the range indicated above, the advantageous effect tends to be more suitably achieved.

Herein, the thickness in the tire radial direction of the base tread refers to the thickness of the base tread in the tire radial direction from the crown (central portion) of the tread.

The cap tread in the tire preferably has a thickness in the tire radial direction of 2 mm or more, more preferably 3 mm or more, still more preferably 5 mm or more, but preferably 10 mm or less, more preferably 8 mm or less. When the cap tread has a thickness in the tire radial direction within the range indicated above, the advantageous effect tends to be more suitably achieved.

Herein, the thickness in the tire radial direction of the cap tread refers to the thickness of the cap tread in the tire radial direction from the crown (central portion) of the tread.

The base tread composition may be similar to the suitable embodiments described above. In particular, to further improve resistance to tread block chipping, the base tread composition preferably contains the silica in an amount within the above-mentioned suitable range. The base tread composition also preferably contains a carbon black together with the silica. More preferably, the carbon black has a nitrogen adsorption specific surface area within the above-mentioned suitable range. Moreover, the amount of the silica based on 100% by mass of the total filler (reinforcing filler) is preferably adjusted within the above-mentioned suitable range. It is further preferred to combine those suitable embodiments.

The cap tread composition is described below.

The compounding ingredients described for the base tread composition and their suitable embodiments may be applied to the cap tread composition. The following only describes the features different from those of the base tread composition. The other features not described below are similar to those of the base tread composition.

The cap tread composition is not limited as long as it contains an elastomer component, a silica, and a dicyclopentadiene-aromatic compound copolymer resin and/or a hydrogenated dicyclopentadiene resin.

The elastomer component preferably includes a rubber component. The rubber component preferably includes a diene rubber, more preferably an isoprene-based rubber, BR, or SBR, still more preferably BR or SBR.

The amount of the SBR based on 100% by mass of the total elastomer component is preferably 20% by mass or more, more preferably 40% by mass or more, but is preferably 90% by mass or less, more preferably 80% by mass or less. When the amount is within the range indicated above, the advantageous effect tends to be better achieved.

The amount of the BR based on 100% by mass of the total elastomer component is preferably 10% by mass or more, more preferably 20% by mass or more, but is preferably 80% by mass or less, more preferably 60% by mass or less. When the amount is within the range indicated above, the advantageous effect tends to be more suitably achieved.

The amount of the silica per 100 parts by mass of the total elastomer component (preferably the total rubber component) is preferably 10 parts by mass or more, more preferably 40 parts by mass or more, still more preferably 60 parts by mass or more, particularly preferably 70 parts by mass or more, most preferably 80 parts by mass or more, further most preferably 90 parts by mass or more, but is preferably 200 parts by mass or less, more preferably 150 parts by mass or less, still more preferably 120 parts by mass or less. When the amount is within the range indicated above, the advantageous effect tends to be more suitably achieved.

In the composition, the amount of the silica based on 100% by mass of the total filler (reinforcing filler) is preferably 30% by mass or more, more preferably 50% by mass or more, still more preferably 70% by mass or more, particularly preferably 90% by mass or more, and may be 100% by mass. When the amount is within the range indicated above, the advantageous effect tends to be more suitably achieved.

The amount of the oil per 100 parts by mass of the total elastomer component (preferably the total rubber component) is preferably 5 parts by mass or more, more preferably 10 parts by mass or more, but is preferably 70 parts by mass or less, more preferably 50 parts by mass or less, still more preferably 30 parts by mass or less. When the amount is within the range indicated above, the advantageous effect tends to be better achieved.

The carbon black preferably has a nitrogen adsorption specific surface area ($N_2SA$) of 30 $m^2/g$ or more, more preferably 80 $m^2/g$ or more, still more preferably 100 $m^2/g$ or more, but preferably 200 $m^2/g$ or less, more preferably 150 $m^2/g$ or less. When the $N_2SA$ is within the range indicated above, the advantageous effect tends to be better achieved.
Herein, the $N_2SA$ of the carbon black is determined in accordance with JIS K6217-2:2001.
The amount of the carbon black per 100 parts by mass of the total elastomer component (preferably the total rubber component) is preferably 1 part by mass or more, more preferably 3 parts by mass or more, but is preferably 50 parts by mass or less, more preferably 30 parts by mass or less, still more preferably 20 parts by mass or less. When the amount is within the range indicated above, the advantageous effect tends to be better achieved.
The base tread composition preferably contains a combination of an isoprene-based rubber and a styrene thermoplastic elastomer as the elastomer component, more preferably a combination of an isoprene-based rubber and SIS and/or SEBS, still more preferably a combination of an isoprene-based rubber and SIS. In addition to the above combination, the base tread composition preferably further contains BR and/or SBR as the elastomer component, more preferably BR and SBR.
In the preferred embodiments of the base tread composition, the amount of the isoprene-based rubber based on 100% by mass of the total elastomer component is preferably 30% by mass or more, but is preferably 80% by mass or less.
In the preferable embodiments of the base tread composition, the amount of the styrene thermoplastic elastomer based on 100% by mass of the total elastomer component is preferably 10% by mass or more, but is preferably 30% by mass or less.
In the preferred embodiments of the base tread composition, the amount of the dicyclopentadiene-aromatic compound copolymer resin and the hydrogenated dicyclopentadiene resin (the combined amount of the dicyclopentadiene-aromatic compound copolymer resin and the hydrogenated dicyclopentadiene resin) per 100 parts by mass of the total elastomer component (preferably the total rubber component) is preferably 80 parts by mass or less, more preferably 60 parts by mass or less, still more preferably 40 parts by mass or less, particularly preferably 30 parts by mass or less, most preferably 20 parts by mass or less.
Moreover, in the preferred embodiments, the base tread composition preferably contains a dicyclopentadiene-aromatic compound copolymer resin.
In the preferred embodiments of the base tread composition, the amount of the silica per 100 parts by mass of the total elastomer component (preferably the total rubber component) is preferably 100 parts by mass or less, more preferably 80 parts by mass or less, still more preferably 50 parts by mass or less.
Preferably, in the tire, both the cap tread composition and the base tread composition contain a dicyclopentadiene-aromatic compound copolymer resin.
Preferably, in the tire, the base tread composition has any of the preferred embodiments, while the cap tread composition contains BR and/or SBR, more preferably BR and SBR, as the elastomer component. In this case, the amounts of the BR and SBR are as described above.

## EXAMPLES

The present invention is specifically described below with reference to, but not limited to, examples.
The chemicals used in the examples and comparative examples are listed below.

SBR: BUNASBR2353 (styrene content: 27% by mass) available from Lanxess
BR: CB24 (BR synthesized using a Nd catalyst, cis content: 96% by mass, vinyl content: 0.7% by mass, Mw: 500,000) available from Lanxess
NR: TSR20 (natural rubber)
Thermoplastic elastomer 1: D1161 (SIS) available from Kraton Corporation
Thermoplastic elastomer 2: Tuftec P2000 (SEBS) available from Asahi Kasei Corporation
Carbon black: N351 ($N_2SA$: 71 $m^2/g$) available from Cabot Japan K.K.
Silica: VN3 ($N_2SA$: 175 $m^2/g$) available from Degussa
Silane coupling agent 1: NXT-Z45 (a copolymer of linking units A and B (linking unit A: 55 mol%, linking unit B: 45 mol%)) available from Momentive
Silane coupling agent 2: NXT (a silane coupling agent of formula (III) in which p = 2, q = 3, and k = 7) available from Momentive
Resin 1 (dicyclopentadiene-aromatic compound copolymer resin): Oppera PR-383 (aromatic content: 9.6% by mass, softening point: 103°C, Mw: 770) available from Exxon Mobil
Resin 2 (hydrogenated dicyclopentadiene resin): T-REZ OP501 (hydrogenated DCPD resin, softening point: 140°C, dicyclopentadiene-derived unit content: 100% by mass) available from JXTG Nippon Oil & Energy Corporation
Resin 3 (unhydrogenated dicyclopentadiene resin): DCPD resin (product code: DO443, unhydrogenated DCPD

resin, softening point: 140°C, dicyclopentadiene-derived unit content: 100% by mass) available from Tokyo Chemical Industry Co., Ltd.
Oil: Vivatec 500 (TDAE, low polycyclic aromatic oil, aromatic process oil) available from H&R
Antioxidant 1: NOCRAC 6C (N-(1,3-dimethylbutyl)-N'-phenyl-p-phenylenediamine, 6PPD) available from Ouchi Shinko Chemical Industrial Co., Ltd.
Antioxidant 2: FLECTOL TMQ (2,2,4-trimethyl-1,2-dihydroquinoline polymer) available from FLEXSYS
Anti-reversion agent: PERKALINK 900 (1,3-bis(citraconimidomethyl)benzene) available from Flexsys
Processing aid 1: WB16 (a mixture of a fatty acid metal salt (fatty acid calcium salt, constituent fatty acids: C14-C20 saturated fatty acids) and a fatty acid amide) available from Struktol
Processing aid 2: EF44 (a saturated fatty acid zinc salt) available from Struktol
Stearic acid: TSUBAKI available from NOF Corporation
Zinc oxide: zinc oxide #2 available from Mitsui Mining & Smelting Co., Ltd.
Wax: SUNNOC N available from Ouchi Shinko Chemical Industrial Co., Ltd.
Vulcanization accelerator 1: NOCCELER CZ (N-cyclohexyl-2-benzothiazolylsulfenamide) available from Ouchi Shinko Chemical Industrial Co., Ltd.
Vulcanization accelerator 2: NOCCELER D (N,N'-diphenylguanidine) available from Ouchi Shinko Chemical Industrial Co., Ltd.
Insoluble sulfur: Seimi OT (oil content: 10%) available from Nippon Kanryu Industry Co., Ltd.

(Examples and Comparative Examples)

The chemicals other than the sulfur and vulcanization accelerators in the amounts shown in Table 1 or 2 were kneaded in a Banbury mixer at 165°C for four minutes to give a kneaded mixture. Then, the kneaded mixture was kneaded with the sulfur and vulcanization accelerators in an open roll mill at 80°C for four minutes to give an unvulcanized rubber composition.

The unvulcanized rubber composition was press-vulcanized at 170°C for 10 minutes to give a vulcanized rubber composition.

Separately, the unvulcanized rubber composition prepared as above was extruded into the shape of a base tread and assembled with other tire components such as a cap tread in a tire building machine to build an unvulcanized tire, which was then press-vulcanized at 150°C for 10 minutes to prepare a test tire (tire size: 205/55R16). It should be noted that in each tire, the thickness in the tire radial direction of the base tread was 1 mm, and the thickness in the tire radial direction of the cap tread was 6 mm.

The cap tread in each unvulcanized tire was prepared by kneading the resin shown in Table 1 or 2 with 60 parts by mass of SBR, 40 parts by mass of BR, 10 parts by mass of a carbon black (N220 available from Mitsubishi Chemical Corporation, $N_2SA$: 114 $m^2/g$), 100 parts by mass of a silica (VN3), 8 parts by mass of a silane coupling agent (NXT-Z45), 15 parts by mass of TDAE oil, 2 parts by mass of stearic acid, 2 parts by mass of zinc oxide, 1 part by mass of an antioxidant (6PPD), 1 part by mass of a wax, 1.5 parts by mass of sulfur (powdered sulfur available from Tsurumi Chemical Industry Co., Ltd.), 2 parts by mass of the vulcanization accelerator NS (NOCCELER NS available from Ouchi Shinko Chemical Industrial Co., Ltd., N-t-butyl-2-benzothiazole sulfenamide [TBBS]), and 1 part by mass of the vulcanization accelerator DPG under conditions as described above, and extruding the kneaded mixture into the shape of a cap tread.

The thus prepared vulcanized rubber compositions and test tires were evaluated as follows. Tables 1 and 2 show the results. Comparative Example 1-1 and Comparative Example 2-1 are used as standards of comparison in Tables 1 and 2, respectively.

<Fuel economy>

Specimens for analysis were cut out from rubber slab sheets (2 mm × 130 mm × 130 mm) of the vulcanized rubber compositions. The tan δ of the specimens for analysis was determined with the viscoelastic spectrometer VES (Iwamoto Seisakusho Co., Ltd.) at a temperature of 50°C, an initial strain of 10%, a dynamic strain of 2%, and a frequency of 10 Hz. The measured value of each formulation example is expressed as an index (tan δ index) relative to the standard comparative example taken as 100. A higher tan δ index indicates better fuel economy.

<Tensile test>

No. 3 dumbbell specimens prepared from the vulcanized rubber compositions were subjected to a tensile test in accordance with JIS K 6251 "Rubber, vulcanized or thermoplastic -- Determination of tensile stress-strain properties" to measure the tensile strength at break (TB) and elongation at break (EB) of the specimens. The TB and EB values of

each formulation example are expressed as an index (TB or EB index) using the equations below, where the standard comparative example is set equal to 100. Higher TB and EB indices each indicate better durability (tensile strength at break or elongation at break).

$$(\text{TB index}) = (\text{TB of each formulation example})/(\text{TB of standard comparative example}) \times 100$$

$$(\text{EB index}) = (\text{EB of each formulation example})/(\text{EB of standard comparative example}) \times 100$$

<Simulation drum test for resistance to tread block chipping>

The test tires were run at 80 km/h on a drum under overload conditions in which the load was 140% of the maximum load (maximum air pressure conditions) defined in the JIS standard. The distance at which abnormalities such as a bulge in the tread portion or block chipping occurred was measured. The distance of each formulation example is expressed as an index (index of resistance to tread block chipping) using the equation below, where Comparative Example 1-1 is set equal to 100. A higher index of resistance to tread block chipping indicates better resistance to tread block chipping (better durability).

$$(\text{Index of resistance to tread block chipping}) = (\text{Distance of each formulation example})/(\text{Distance of Comparative Example 1-1}) \times 100$$

[Table 1]

| | | Example 1-1 | Example 1-2 | Example 1-3 | Example 1-4 | Comparative Example 1-1 | Comparative Example 1-2 |
|---|---|---|---|---|---|---|---|
| Cap tread | | | | | | | |
| Resin 1 | | 20 | | 20 | 20 | | |
| Resin 2 | | | 20 | | | 20 | 20 |
| Base tread | | | | | | | |
| Amount (parts by mass) | SBR | 18 | 18 | 18 | 18 | 18 | 18 |
| | BR | 17 | 17 | 17 | 17 | 17 | 17 |
| | NR | 65 | 65 | 45 | 45 | 65 | 65 |
| | Thermoplastic elastomer 1 | | | 20 | | | |
| | Thermoplastic elastomer 2 | | | | 20 | | |
| | Carbon black | 20 | 20 | 20 | 20 | 20 | 40 |
| | Silica | 30 | 30 | 30 | 30 | 30 | |
| | Silane coupling agent 1 | 2.4 | | 2.4 | 2.4 | 2.4 | |
| | Silane coupling agent 2 | | 2.4 | | | | |
| | Resin 1 | 10 | | 10 | 10 | | |
| | Resin 2 | | 10 | | | | |
| | Resin 3 | | | | | 10 | 10 |
| | Oil | 2 | 2 | 2 | 2 | 2 | 2 |
| | Antioxidant 1 | 3 | 3 | 3 | 3 | 3 | 3 |
| | Antioxidant 2 | 1 | 1 | 1 | 1 | 1 | 1 |
| | Anti-reversion agent | 2 | 2 | 2 | 2 | 2 | 2 |
| | Processing aid 1 | 2 | 2 | 2 | 2 | 2 | 2 |
| | Processing aid 2 | 2 | 2 | 2 | 2 | 2 | |
| | Stearic acid | 2 | 2 | 2 | 2 | 2 | 2 |
| | Zinc oxide | 5 | 5 | 5 | 5 | 5 | 5 |
| | Wax | 2 | 2 | 2 | 2 | 2 | 2 |
| | Vulcanization accelerator 1 | 1.5 | 1.5 | 1.5 | 1.5 | 1.5 | 1.5 |
| | Vulcanization accelerator 2 | 1 | 1 | 1 | 1 | 1 | |
| | Insoluble sulfur | 2.8 | 2.8 | 2.8 | 2.8 | 2.8 | 2.8 |
| | Fuel economy | 115 | 110 | 120 | 118 | 100 | 90 |
| | Tensile strength at break (TB) | 110 | 105 | 113 | 112 | 100 | 80 |
| | Elongation at break (EB) | 120 | 105 | 130 | 127 | 100 | 75 |
| | **Resistance to tread block chipping** | **130** | **110** | **140** | **135** | **100** | **75** |

[Table 2]

| | | Example 2-1 | Example 2-2 | Example 2-3 | Example 2-4 | Comparative Example 2-1 | Comparative Example 2-2 |
|---|---|---|---|---|---|---|---|
| Cap tread | | | | | | | |
| Resin 3 | | 20 | 20 | 20 | 20 | 20 | 20 |
| Base tread | | | | | | | |
| Amount (parts by mass) | SBR | 18 | 18 | 18 | 18 | 18 | 18 |
| | BR | 17 | 17 | 17 | 17 | 17 | 17 |
| | NR | 65 | 65 | 45 | 45 | 65 | 65 |
| | Thermoplastic elastomer 1 | | | 20 | | | |
| | Thermoplastic elastomer 2 | | | | 20 | | |
| | Carbon black | 20 | 20 | 20 | 20 | 20 | 40 |
| | Silica | 30 | 30 | 30 | 30 | 30 | |
| | Silane coupling agent 1 | 2.4 | | 2.4 | 2.4 | 2.4 | |
| | Silane coupling agent 2 | | 2.4 | | | | |
| | Resin 1 | 10 | | 10 | 10 | | |
| | Resin 2 | | 10 | | | | |
| | Resin 3 | | | | | 10 | 10 |
| | Oil | 2 | 2 | 2 | 2 | 2 | 2 |
| | Antioxidant 1 | 3 | 3 | 3 | 3 | 3 | 3 |
| | Antioxidant 2 | 1 | 1 | 1 | 1 | 1 | 1 |
| | Anti-reversion agent | 2 | 2 | 2 | 2 | 2 | 2 |
| | Processing aid 1 | 2 | 2 | 2 | 2 | 2 | 2 |
| | Processing aid 2 | 2 | 2 | 2 | 2 | 2 | |
| | Stearic acid | 2 | 2 | 2 | 2 | 2 | 2 |
| | Zinc oxide | 5 | 5 | 5 | 5 | 5 | 5 |
| | Wax | 2 | 2 | 2 | 2 | 2 | 2 |
| | Vulcanization accelerator 1 | 1.5 | 1.5 | 1.5 | 1.5 | 1.5 | 1.5 |
| | Vulcanization accelerator 2 | 1 | 1 | 1 | 1 | 1 | |
| | Insoluble sulfur | 2.8 | 2.8 | 2.8 | 2.8 | 2.8 | 2.8 |
| | Fuel economy | 115 | 110 | 120 | 118 | 100 | 90 |
| | Tensile strength at break (TB) | 110 | 105 | 113 | 112 | 100 | 80 |
| | Elongation at break (EB) | 120 | 105 | 130 | 127 | 100 | 75 |
| | **Resistance to tread block chipping** | **120** | **103** | **125** | **122** | **97** | **73** |

Examples 2-1 to 2-4 are Reference Examples outside the scope of the claims but useful to understand the invention.

Tables 1 and 2 demonstrate that the overall performance in terms of fuel economy, tensile strength at break, and elongation at break (expressed as the sum of the three indices (fuel economy, tensile strength at break, and elongation at break) was improved in the examples containing an elastomer component, a silica, and a dicyclopentadiene-aromatic compound copolymer resin and/or a hydrogenated dicyclopentadiene resin. It is also found that high resistance to tread block chipping was exhibited in the tires that had a base tread including a base tread composition containing an elastomer component, a silica, and a dicyclopentadiene-aromatic compound copolymer resin and/or a hydrogenated dicyclopentadiene resin.

Moreover, it is demonstrated that higher resistance to tread block chipping was exhibited in the tires that had a base tread including a base tread composition containing an elastomer component, a silica, and a dicyclopentadiene-aromatic compound copolymer resin and/or a hydrogenated dicyclopentadiene resin, and a cap tread including a cap tread composition containing an elastomer component, a silica, and a dicyclopentadiene-aromatic compound copolymer resin and/or a hydrogenated dicyclopentadiene resin.

Moreover, a comparison of Examples 1-1 and Reference Example 2-1 with Comparative Examples 1-1 and 2-1, a comparison of Examples 1-2 and Reference Example 2-2 with Comparative Examples 1-1 and 2-1, and the like indicate that the combination of a base tread including a base tread composition containing an elastomer component, a silica, and a dicyclopentadiene-aromatic compound copolymer resin and/or a hydrogenated dicyclopentadiene resin with a cap tread including a cap tread composition containing an elastomer component, a silica, and a dicyclopentadiene-aromatic compound copolymer resin and/or a hydrogenated dicyclopentadiene resin provided synergistically improved resistance to tread block chipping.

## Claims

1. A tire, comprising a base tread comprising a base tread composition and a cap tread comprising a cap tread composition,

    the base tread composition comprising:

        an elastomer component;
        a silica; and
        at least one of a dicyclopentadiene-aromatic compound copolymer resin or a hydrogenated dicyclopentadiene resin, and

    the cap tread composition comprising:

        an elastomer component;
        a silica; and
        at least one of a dicyclopentadiene-aromatic compound copolymer resin or a hydrogenated dicyclopentadiene resin.

2. The tire according to claim 1,
wherein a combined amount of the dicyclopentadiene-aromatic compound copolymer resin and the hydrogenated dicyclopentadiene resin in the base tread composition is 80 parts by mass or less per 100 parts by mass of the total elastomer component.

3. The tire according to claim 1 or 2,
wherein the base tread composition comprises a mercapto silane coupling agent.

4. The tire according to any one of claims 1 to 3,
wherein the tire is for passenger vehicles.

## Patentansprüche

1. Reifen, umfassend eine Basislauffläche, die eine Basislaufflächenzusammensetzung umfasst, und eine Laufflächenkrone, die eine Laufflächenkronenzusammensetzung umfasst,

    wobei die Basislaufflächenzusammensetzung umfasst:

        eine Elastomerkomponente;
        ein Siliciumdioxid; und
        mindestens eines von einem Dicyclopentadien-aromatische Verbindung-Copolymerharz oder einem hydrierten Dicyclopentadienharz, und

    wobei die Laufflächenkronenzusammensetzung umfasst:

        eine Elastomerkomponente;
        ein Siliciumdioxid; und
        mindestens eines von einem Dicyclopentadien-aromatische Verbindung-Copolymerharz oder einem hydrierten Dicyclopentadienharz.

2. Reifen nach Anspruch 1,
wobei die kombinierte Menge des Dicyclopentadien-aromatische Verbindung-Copolymerharzes und des hydrierten Dicyclopentadienharzes in der Basislaufflächenzusammensetzung 80 Massenteile oder weniger pro 100 Massenteile der gesamten Elastomerkomponente beträgt.

3. Reifen nach Anspruch 1 oder 2,
wobei die Basislaufflächenzusammensetzung ein Mercaptosilan-Kopplungsmittel enthält.

4. Reifen nach einem der Ansprüche 1 bis 3,
wobei der Reifen für Personenfahrzeuge bestimmt ist.

## Revendications

1. Pneu, comprenant une bande de roulement de base comprenant une composition de bande de roulement de base et une bande de roulement supérieure comprenant une composition de bande de roulement supérieure,

    la composition de bande de roulement de base comprenant :

        un composant de type élastomère ;
        une silice ; et
        au moins l'une parmi une résine de copolymère de dicyclopentadiène-composé aromatique ou une résine de dicyclopentadiène hydrogénée, et

    la composition de bande de roulement supérieure comprenant :

        un composant de type élastomère ;
        une silice ; et
        au moins l'une parmi une résine de copolymère de dicyclopentadiène-composé aromatique ou une résine de dicyclopentadiène hydrogénée.

2. Pneu selon la revendication 1, une quantité combinée de la résine de copolymère de dicyclopentadiène-composé aromatique et de la résine de dicyclopentadiène hydrogénée dans la composition de bande de roulement de base étant de 80 parties en masse ou moins par 100 parties en masse du composant de type élastomère total.

3. Pneu selon la revendication 1 ou 2, la composition de bande de roulement de base comprenant un agent de couplage de type mercapto silane.

4. Pneu selon l'une quelconque des revendications 1 à 3, le pneu étant pour des véhicules à passager.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 3323633 A1
- JP 2018100321 A
- FR 3071842 A1
- JP 2014189774 A
- JP S59161415 A